# FASCICULE DE BREVET EUROPEEN

(11) **EP 2 590 818 B1**
(45) Date de publication et mention de la délivrance du brevet: **14.12.2016**
(21) Numéro de dépôt: 11743103.1
(22) Date de dépôt: 06.07.2011
(51) Int. Cl.: B32B 17/10, G02B 27/01

(54) **STRUCTURE FEUILLETEE POUR LA VISUALISATION D'INFORMATIONS**
SCHICHTSTRUKTUR ZUR INFORMATIONSANZEIGE
LAYERED STRUCTURE FOR THE VISUALIZATION OF INFORMATION

(30) Priorité: 07.07.2010 FR 1002860
(43) Date de publication de la demande: 15.05.2013
(73) Titulaire: Saint-Gobain Glass France, 92400 Courbevoie (FR)
(72) Inventeur: DEKONINCK, Alexandra, 95600 Eaubonne (FR); SABLAYROLLES, Jean, 60530 Crouy en Thelle (FR)
(74) Mandataire: Saint-Gobain Recherche
(86) Numéro de dépôt international: PCT/FR2011/051612
(87) Numéro de publication internationale: WO 2012/004535

(56) Documents cités:
- EP-A1- 2 110 237
- FR-A1- 2 914 070
- US-A- 2 878 606
- US-A1- 2002 120 916
- US-A1- 2005 285 920

## Description

La présente invention a trait à un dispositif d'affichage, particulièrement transparent, fonctionnant avec des luminophores. Il s'agit notamment d'un vitrage feuilleté pour la visualisation d'informations du type pare-brise pour véhicule de transport, vitrage pour bâtiment ou mobilier urbain. Ainsi connaît-on déjà, par exemple, des pare-brise de véhicules automobiles équipés de systèmes de viseurs tête haute (HUD pour « Head Up Display » en anglais).

Des couches peuvent être formées à cet effet par dépôt par sérigraphie d'une pâte constituée de polyvinylbutyral, d'un solvant tel que la cyclohexanone et d'un luminophore. Cette technique de dépôt est décrite dans le document FR-A-2929017.

Les inventeurs ont maintenant cherché un moyen d'imprimer des luminophores sur l'adhésif intercalaire de vitrage feuilleté (polyvinylbutyral ou équivalent) ou sur le verre, sans que la couche de luminophore ne soit endommagée lors des manutentions ou stockages préalables à l'assemblage du vitrage feuilleté.

A cet effet, l'invention a pour objet un procédé de préparation d' une structure feuilletée comprenant au moins successivement un substrat, une première couche de luminophore et une deuxième couche de matériau polymère adhésif. Les inventeurs se sont aperçus que cette structure garantissait la protection et la durabilité recherchée de la couche de luminophore, et ont mis au point des techniques et précurseurs pour le dépôt de ces deux couches. La fabrication de vitrages feuilletés pour la visualisation d'informations est ainsi à la fois possible et facilitée.

Au sens de l'invention, un matériau polymère adhésif désigne celui de l'intercalaire qui colle deux feuilles transparentes plus ou moins rigides en matériau verrier ou polymère, dans un vitrage feuilleté. Des exemples en seront donnés dans la suite.

Les inventeurs ont pu créer les conditions de parfaite compatibilité et adhésion de la première couche sur le substrat, de la deuxième couche sur la première, et globalement de la structure feuilletée elle-même au sein du vitrage feuilleté à dispositif de visualisation d'informations.

Selon des caractéristiques préférées de la structure feuilletée:
- elle est transparente ;
- le substrat est choisi parmi
   un matériau minéral, notamment verrier (verre, vitrocéramique...), et un matériau polymère choisi en particulier parmi les polycarbonate, polymère acrylique tel que poly((méth)acrylate de méthyle), polyoléfine, polyamide, résine ionomère et similaire, seul ou en mélange de plusieurs d'entre eux, ou bien encore adhésif et compatible avec celui de la deuxième couche ;
- le luminophore est choisi parmi une coumarine, un stylbène, une bétaïne, un complexe de terres rares, un dérivé de la rhodamine, du fluorol, de téréphtalate, naphtale, naphtalimide, oxazole, pérylène, phényle, pyrène, styryle ou xanthène, seul ou en mélange de plusieurs d'entre eux ;
- la première couche de luminophore comprend un matériau polymère adhésif compatible avec celui de la deuxième couche ;
- le matériau polymère adhésif de la deuxième couche est choisi parmi un polyvinylbutyral, un polyuréthane, un copolymère éthylène-acétate de vinyle, seul ou en mélange de plusieurs d'entre eux ; en particulier toute qualité de polyvinylbutyral, texturé, rugueux ou non, procurant une isolation acoustique ou non, plus ou moins plastifié, peut être employée ;
- la masse surfacique de luminophore de la première couche est au moins égale à 0,1, de préférence 1 g/m², au plus égale à 5, de préférence 3,5 g/m² ;
- la masse surfacique de matériau polymère adhésif de la deuxième couche est au moins égale à 1, de préférence 7 g/m², au plus égale à 20, de préférence 14 g/m² ;
- elle comprend une feuille en matériau verrier collée directement sur la deuxième couche de matériau polymère adhésif, ou reliée à celle-ci par l'intermédiaire d'une troisième couche de matériau polymère adhésif ;
- elle comprend une feuille en matériau verrier collée directement sur le substrat, ou reliée à celui-ci par l'intermédiaire d'une quatrième couche de matériau polymère adhésif.

L'objet de l'invention consiste en un procédé de préparation d'une structure feuilletée décrite ci-dessus, comprenant les opérations
- de dépôt sur le substrat d'une solution de luminophore, puis
- de dépôt sur la première couche de luminophore qui en résulte, d'une solution de matériau polymère adhésif.

Selon des caractéristiques préférées de ce procédé,
- les solutions de luminophore et de matériau polymère adhésif ont comme solvant un alcool tel que méthanol, éthanol, n- et iso-propanol, n- et sec-butanol, alcool benzylique, un cellosolve tel que méthyl-, éthyl- , butyl-cellosolve, une cétone telle qu'acétone, méthyléthylcétone, cyclohexanone, isophorone, un amide tel que diméthylacétamide, N,N-diméthylformamide, N-méthyl-2-pyrrolidone, un éther tel que dioxane, tétrahydrofurane ou un hydrocarbure aromatique tel que toluène, pyrridine, seul ou en mélange de plusieurs d'entre eux ;
- la solution de luminophore comprend un matériau polymère adhésif compatible avec celui de la solution de matériau polymère adhésif ;
- le dépôt de chaque solution est effectué par pulvérisation, sérigraphie, impression jet d'encre ou similaire.

Le vitrage feuilleté est utile pour la visualisation d'informations du type pare-brise pour véhicule de transport, vitrage pour bâtiment ou mobilier urbain, comprenant une structure feuilletée telle que décrite précédemment.

L'invention est maintenant illustrée par les exemples qui suivent, dans lesquels les proportions indiquées sont des pourcentages massiques.

### Exemple 1

### Formulation de la solution de luminophore :

Dissolution du diéthyl-2,5-dihydroxytéréphtalate et de PVB commercialisé par la société Solutia sous la référence commerciale RF41 dans du THF (tétrahydrofurane) avec les ratios suivants : luminophore/PVB/solvant = 2/2/96 Formulation de la solution de PVB :

Dissolution de PVB RF41 dans du THF avec le ratio suivant : PVB/solvant = 2/98

Ces mélanges sont agités jusqu'à une parfaite solubilisation du luminophore et du PVB.

On effectue successivement les dépôts des solutions de luminophore puis de PVB par pulvérisation sur un substrat de PVB RF 41 de 300X300 mm². La buse passe huit fois sur le substrat (quatre allers-retours), opération répétée quatre fois en tournant chaque fois le substrat d'un quart de tour.

On emploie les paramètres de pulvérisation suivants :
- pression d'atomisation : 3,5 bars
- débit : 70 ml/min
- vitesse de balayage : 300 mm/s.

On obtient une première couche de luminophore de 3 g/m² de masse surfacique, et une deuxième couche de polyvinylbutyral de 7 g/m² de masse surfacique. On attend, avant de pulvériser la solution de PVB, que la première couche de luminophore soit sèche.

D'autre part la rugosité du substrat a été caractérisée avant et après les deux dépôts successifs.

La rugosité moyenne Ra est la moyenne arithmétique des écarts du profil de rugosité filtré, de la ligne moyenne au sein de la course de mesure, selon les normes DIN 4768/1 ; DIN 4762/1 E et ISO/DIN 4287.

La profondeur moyenne de rugosité RZ est la moyenne arithmétique des profondeurs de rugosité isolées de cinq fractions de mesures successives du profil de rugosité filtré selon la norme DIN 4768/1.

Sur plusieurs échantillons, les valeurs de Ra (µm), respectivement RZ (µm) sont de 9 à 11, respectivement 41 à 48 µm avant, et 7 à 8, respectivement 34 à 36 µm après les deux dépôts successifs.

### Exemple 2

On reproduit l'exemple 1 avec les formulations suivantes, mettant en oeuvre deux solvants.

### Formulation de la solution de luminophore :

Dissolution du diéthyl-2,5-dihydroxytéréphtalate et de PVB RF41 dans du THF (solvant 1) et de l'éthanol (solvant 2) avec les ratios suivants: luminophore/PVB/solvant1/solvant2 = 2/2/48/48

### Formulation de la solution de PVB :

Dissolution de PVB RF41 dans du THF (solvant 1) et de l'éthanol (solvant 2) avec le ratio suivant : PVB/solvant = 2/49/49

Les mesures de rugosité du substrat avant et après les deux dépôts successifs donnent des valeurs dans les mêmes domaines qu'à l'exemple 1.

### Exemple 3

On reproduit l'exemple 1 avec les formulations suivantes, mettant en oeuvre du PVB commercialisé par la société Solutia sous la référence commerciale AG21.

### Formulation de la solution de luminophore :

Dissolution du diéthyl-2,5-dihydroxytéréphtalate et de PVB AG21 dans du THF (tétrahydrofurane) avec les ratios suivants : luminophore/PVB/solvant = 2/2/96

### Formulation de la solution de PVB :

Dissolution de PVB AG21 dans du THF avec le ratio suivant : PVB/solvant = 2/98

### Exemple 4

On reproduit l'exemple 1 en l'absence de PVB dans la solution de luminophore.

### Formulation de la solution de luminophore :

Dissolution du diéthyl-2,5-dihydroxytéréphtalate dans du THF (tétrahydrofurane) avec les ratios suivants : luminophore/solvant = 2/98

### Formulation de la solution de PVB :

Dissolution de PVB RF41 dans du THF avec le ratio suivant : PVB/solvant = 2/98

### Exemple 5

On reproduit l'exemple 1 avec une solution d'un autre luminophore, ne contenant également pas de PVB.

### Formulation de la solution de luminophore :

Dissolution d'un complexe d'europium (Eu(NTA)₃ 2H₂O ; NTA = 1-(2-naphthoyl)-3,3,3-trifluoroacétonate)) dans du THF (tétrahydrofurane) avec les ratios suivants : luminophore/solvant = 2/98

### Formulation de la solution de PVB :

Dissolution de PVB RF41 dans du THF avec le ratio suivant : PVB/solvant = 2/98

On obtient, dans chacun de ces exemples, des couches à parfaite fonctionnalité luminescente, et protégées par leur revêtement de PVB, de telle manière qu'elles peuvent être soumises à toutes les manipulations courantes sans en être nullement affectées.

De plus, lorsque pour préparer la structure feuilletée de l'invention, on a utilisé au départ un PVB de rugosité importante (30 µm < RZ < 50 µm ou 7 µm < Ra < 12 µm), lesdites première et deuxième couche ont diminué la rugosité initiale du substrat de 30, voire 20 % tout au plus et jusqu'à 10 à 0 % dans certains cas. En d'autres termes, la rugosité initiale du substrat a été quasiment conservée, ce qui peut constituer un avantage lorsque cette rugosité vise à faciliter le dégazage par exemple, au cours de l'assemblage d'un feuilleté.

## Revendications

1. Procédé de préparation d'une structure feuilletée comprenant au moins successivement un substrat, une première couche de luminophore et une deuxième couche de matériau polymère adhésif, **caractérisé en ce qu'**il comprend les opérations
- de dépôt sur le substrat d'une solution de luminophore, puis
- de dépôt sur la première couche de luminophore qui en résulte, d'une solution de matériau polymère adhésif.

2. Procédé selon la revendication 1, **caractérisé en ce que** les solutions de luminophore et de matériau polymère adhésif ont comme solvant un alcool, un cellosolve, une cétone, un amide, un éther ou un hydrocarbure aromatique, seul ou en mélange de plusieurs d'entre eux.

3. Procédé selon l'une des revendications 1 ou 2, **caractérisé en ce que** la solution de luminophore comprend un matériau polymère adhésif compatible avec celui de la solution de matériau polymère adhésif.

4. Procédé selon l'une des revendications 1 à 3, **caractérisé en ce que** le dépôt de chaque solution est effectué par pulvérisation, sérigraphie, impression jet d'encre ou similaire.

5. Procédé selon l'une des revendications précédentes, **caractérisé en ce que** la structure feuilletée est transparente.

6. Procédé selon l'une des revendications précédentes, **caractérisé en ce que** le substrat est choisi parmi un matériau minéral et un matériau polymère.

7. Procédé selon la revendication 6, **caractérisé en ce que** le matériau minéral est un matériau verrier.

8. Procédé selon la revendication 6, **caractérisé en ce que** le matériau polymère est choisi parmi les polycarbonate, polymère acrylique tel que poly((méth)acrylate de méthyle), polyoléfine, polyamide, résine ionomère et similaire, seul ou en mélange de plusieurs d'entre eux.

9. Procédé selon la revendication 6, **caractérisé en ce que** le matériau polymère est adhésif et compatible avec celui de la deuxième couche.

10. Procédé selon l'une des revendications précédentes, **caractérisé en ce que** le luminophore est choisi parmi une coumarine, un stylbène, une bétaïne, un complexe de terres rares, un dérivé de la rhodamine, du fluorol, de téréphtalate, naphtale, naphtalimide, oxazole, pérylène, phényle, pyrène, styryle ou xanthène, seul ou en mélange de plusieurs d'entre eux.

11. Procédé selon l'une des revendications précédentes, **caractérisé en ce que** la première couche de luminophore comprend un matériau polymère adhésif compatible avec celui de la deuxième couche.

12. Procédé selon l'une des revendications précédentes, **caractérisé en ce que** le matériau polymère adhésif de la deuxième couche est choisi parmi un polyvinylbutyral, un polyuréthane, un copolymère éthylène-acétate de vinyle, seul ou en mélange de plusieurs d'entre eux.

13. Procédé selon l'une des revendications précédentes, **caractérisé en ce que** la masse surfacique de luminophore de la première couche est au moins égale à 0,1, de préférence 1 g/m².

14. Procédé selon l'une des revendications précédentes, **caractérisé en ce que** la masse surfacique de luminophore de la première couche est au plus égale à 5, de préférence 3,5 g/m².

15. Procédé selon l'une des revendications précédentes, **caractérisé en ce que** la masse surfacique de matériau polymère adhésif de la deuxième couche est au moins égale à 1, de préférence 7 g/m².

16. Procédé selon l'une des revendications précédentes, **caractérisé en ce que** la masse surfacique de matériau polymère adhésif de la deuxième couche est au plus égale à 20, de préférence 14 g/m².

17. Procédé selon l'une des revendications précédentes, **caractérisé en ce que** la structure feuilletée comprend une feuille en matériau verrier collée directement sur la deuxième couche de matériau polymère adhésif, ou reliée à celle-ci par l'intermédiaire d'une troisième couche de matériau polymère adhésif.

18. Procédé selon l'une des revendications précédentes, **caractérisé en ce que** la structure feuilletée comprend une feuille en matériau verrier collée directement sur le substrat, ou reliée à celui-ci par l'intermédiaire d'une quatrième couche de matériau polymère adhésif.

## Patentansprüche

1. Verfahren zum Herstellen einer Verbundstruktur, die aufeinander folgend mindestens ein Substrat, eine erste Luminophor-Schicht, und eine zweite Schicht aus klebrigem Polymer-material umfasst, **dadurch gekennzeichnet, dass** es die folgenden Arbeitsschritte umfasst:
- Aufbringen einer Luminophor-Lösung auf dem Substrat und dann
- Aufbringen einer Lösung aus klebrigem Polymermaterial auf der daraus resultierenden ersten Luminophor-Schicht.

2. Verfahren nach Anspruch 1, **dadurch gekennzeichnet, dass** die Luminophor-Lösung und die Lösung aus klebrigem Polymermaterial als Lösungsmittel einen Alkohol, ein Cellosolve, ein Keton, ein Amid, einen Ether oder einen aromatischen Kohlenwasserstoff haben, allein oder im Gemisch aus mehreren von diesen.

3. Verfahren nach einem der Ansprüche 1 oder 2, **dadurch gekennzeichnet, dass** die Luminophor-Lösung ein klebriges Polymermaterial enthält, das mit dem der Lösung aus klebrigem Polymermaterial kompatibel ist.

4. Verfahren nach einem der Ansprüche 1 bis 3, **dadurch gekennzeichnet, dass** das Aufbringen jeder Lösung durch Zerstäubung, Siebdruck, Tintenstrahldruck oder dergleichen erfolgt.

5. Verfahren nach einem der vorhergehenden Ansprüche, **dadurch gekennzeichnet, dass** die Verbundstruktur transparent ist.

6. Verfahren nach einem der vorhergehenden Ansprüche, **dadurch gekennzeichnet, dass** das Substrat aus einem mineralischen Material und einem Polymermaterial ausgewählt ist.

7. Verfahren nach Anspruch 6, **dadurch gekennzeichnet, dass** das mineralische Material ein Glasmaterial ist.

8. Verfahren nach Anspruch 6, **dadurch gekennzeichnet, dass** das Polymermaterial ausgewählt ist aus Polycarbonat, Acrylpolymer wie Polymethyl(meth)acrylat, Polyolefin, Polyamid, Ionomerharz und dergleichen, allein oder im Gemisch aus mehreren von diesen.

9. Verfahren nach Anspruch 6, **dadurch gekennzeichnet, dass** das Polymermaterial klebrig und mit dem der zweiten Schicht kompatibel ist.

10. Verfahren nach einem der vorhergehenden Ansprüche, **dadurch gekennzeichnet, dass** der Luminophor ausgewählt ist aus Kumarin, Stilben, einem Seltene Erden-Komplex, einem Rhodamin-Derivat, Fluorol, Terephthalat, Naphthal, Naphthalimid, Oxazol, Perylen, Phenyl, Pyren, Styryl oder Xanthen, allein oder im Gemisch aus mehreren von diesen.

11. Verfahren nach einem der vorhergehenden Ansprüche, **dadurch gekennzeichnet, dass** die erste Luminophor-Schicht ein klebriges Polymermaterial enthält, das mit dem der zweiten Schicht kompatibel ist.

12. Verfahren nach einem der vorhergehenden Ansprüche, **dadurch gekennzeichnet, dass** das klebrige Polymermaterial der zweiten Schicht ausgewählt ist aus einem Polyvinylbutyral, einem Polyurethan, einem Ethylen-Acetat-Vinyl-Copolymer, allein oder im Gemisch aus mehreren von diesen.

13. Verfahren nach einem der vorhergehenden Ansprüche, **dadurch gekennzeichnet, dass** die flächenbezogene Masse des Luminophors der ersten Schicht mindestens gleich 0,1, vorzugsweise 1 g/m² beträgt.

14. Verfahren nach einem der vorhergehenden Ansprüche, **dadurch gekennzeichnet, dass** die flächenbezogene Masse des Luminophors der ersten Schicht höchstens gleich 5, vorzugsweise 3,5 g/m² beträgt.

15. Verfahren nach einem der vorhergehenden Ansprüche, **dadurch gekennzeichnet, dass** die flächenbezogene Masse des klebrigen Polymermaterials der zweiten Schicht mindestens gleich 1, vorzugsweise 7 g/m² beträgt.

16. Verfahren nach einem der vorhergehenden Ansprüche, **dadurch gekennzeichnet, dass** die flächenbezogene Masse des klebrigen Polymermaterials der zweiten Schicht höchstens gleich 20, vorzugsweise 14 g/m² beträgt.

17. Verfahren nach einem der vorhergehenden Ansprüche, **dadurch gekennzeichnet, dass** die Verbundstruktur eine Glasmaterial-Folie umfasst, die direkt auf die zweite Schicht aus klebrigem Polymermaterial aufgeklebt oder mit ihr mittels einer dritten Schicht aus klebrigem Polymermaterial verbunden ist.

18. Verfahren nach einem der vorhergehenden Ansprüche, **dadurch gekennzeichnet, dass** die Verbundstruktur eine Glasmaterial-Folie umfasst, die direkt auf das Substrat aufgeklebt oder mit ihm mittels einer vierten Schicht aus klebrigem Polymermaterial verbunden ist.

## Claims

1. Process for preparing a laminated structure comprising at least successively a substrate, a phosphor first layer and an adhesive polymer material second layer, **characterized in that** it comprises the operations
- of depositing on the substrate a phosphor solution, then
- of depositing, on the phosphor first layer that results therefrom, an adhesive polymer material solution.

2. Process according to Claim 1, **characterized in that** the phosphor and adhesive polymer material solutions have, as solvent, an alcohol, a cellosolve, a ketone, an amide, an ether or an aromatic hydrocarbon, alone or as a mixture of several thereof.

3. Process according to either of Claims 1 and 2, **characterized in that** the phosphor solution comprises an adhesive polymer material compatible with that of the adhesive polymer material solution.

4. Process according to one of Claims 1 to 3, **characterized in that** the deposition of each solution is carried out by spraying, screen printing, inkjet printing or the like.

5. Process according to one of the preceding claims, **characterized in that** the laminated structure is transparent.

6. Process according to one of the preceding claims, **characterized in that** the substrate is selected from a mineral material and a polymer material.

7. Process according to Claim 6, **characterized in that** the mineral material is a glassy material.

8. Process according to Claim 6, **characterized in that** the polymer material is selected from polycarbonate, acrylic polymer such as polymethyl (meth)acrylate, polyolefin, polyamide, ionomer resin and the like, alone or as a mixture of several thereof.

9. Process according to Claim 6, **characterized in that** the polymer material is adhesive and compatible with that of the second layer.

10. Process according to one of the preceding claims, **characterized in that** the phosphor is selected from a coumarin, a stilbene, a betaine, a complex of rare earth elements, a derivative of rhodamine, of fluorol, of terephthalate, naphthal, naphthalimide, oxazole, perylene, phenyl, pyrene, styryl or xanthene, alone or as a mixture of several thereof.

11. Process according to one of the preceding claims, **characterized in that** the phosphor first layer comprises an adhesive polymer material compatible with that of the second layer.

12. Process according to one of the preceding claims, **characterized in that** the adhesive polymer material of the second layer is selected from a polyvinyl butyral, a polyurethane, an ethylene/vinyl acetate copolymer, alone or as a mixture of several thereof.

13. Process according to one of the preceding claims, **characterized in that** the surface density of phosphor of the first layer is at least equal to 0.1, preferably 1 g/m².

14. Process according to one of the preceding claims, **characterized in that** the surface density of phosphor of the first layer is at most equal to 5, preferably 3.5 g/m².

15. Process according to one of the preceding claims, **characterized in that** the surface density of adhesive polymer material of the second layer is at least equal to 1, preferably 7 g/m².

16. Process according to one of the preceding claims, **characterized in that** the surface density of adhesive polymer material of the second layer is at most equal to 20, preferably 14 g/m².

17. Process according to one of the preceding claims, **characterized in that** the laminated structure comprises a sheet made of glassy material bonded directly to the adhesive polymer material second layer, or connected thereto by means of an adhesive polymer material third layer.

18. Process according to one of the preceding claims, **characterized in that** the laminated structure comprises a sheet made of glassy material bonded directly to the substrate, or connected thereto by means of an adhesive polymer material fourth layer.
